## Europäisches Patentamt

## European Patent Office

## Office européen des brevets

(11) Numéro de publication: **0 118 410**
**A1**

(12) **DEMANDE DE BREVET EUROPEEN**

(21) Numéro de dépôt: **84870027.4**

(22) Date de dépôt: **22.02.84**

(51) Int. Cl.³: **A 01 D 33/14**
**A 01 B 69/00**

(30) Priorité: **24.02.83 BE 210200**

(43) Date de publication de la demande:
**12.09.84 Bulletin 84/37**

(84) Etats contractants désignés:
**AT DE FR GB IT NL**

(71) Demandeur: **AGRI-SERVICE Sprl**
**Place, 58c**
**B-7564 Molembaix(BE)**

(71) Demandeur: **COCKERILL SAMBRE Société Anonyme dite:**
**Avenue Adolphe Greiner, 1**
**B-4100 Liege (Seraing)(BE)**

(72) Inventeur: **Dutrieux, Jean**
**Place, 58c**
**B-7564 Molembaix(BE)**

(74) Mandataire: **Overath, Philippe et al,**
**Cabinet Bede 13, Avenue Antoine Depage**
**B-1050 Bruxelles(BE)**

(54) **Dispositif d'asservissement combiné pour machine agricole.**

(57) Le dispositif pour le contrôle de la profondeur d'organes et le guidage d'une machine agricole comprend un ou plusieurs palpeurs en forme de patin (16) glissant sur le sol qui sont reliés à un support mobile (10) agencé de manière à pouvoir se déplacer d'une part selon un plan vertical et d'autre part selon un plan horizontal ou latéral vers la gauche ou vers la droite par rapport au châssis de la machine; à ce support (10) sont associés des moyens de transmission du mouvement pouvant agir sur le réglage de la profondeur d'un ou plusieurs organes de la machine et sur la direction de la machine.

FIG. 1

EP 0 118 410 A1

La présente invention se rapporte à un dispositif d'asservissement combiné, en particulier pour le contrôle de la profondeur d'organes et le guidage d'une machine agricole et pouvant convenir par exemple pour le contrôle de la profondeur d'organes arracheurs et le guidage d'une machine récolteuse de tubercules tels que des betteraves.

Un des grands problèmes que l'on rencontre avec des machines de ce genre est le réglage de la profondeur des organes arracheurs de tubercules et le fait de pouvoir adapter ce réglage aux inégalités du terrain. En outre, le conducteur doit constamment veiller à bien suivre les rangées de tubercules afin de garantir le bon fonctionnement et le rendement optimal des organes arracheurs.

Plusieurs systèmes ont déjà été proposés mais l'expérience a démontré que l'application de systèmes électriques ne donne pas entière satisfaction du point de vue fiabilité, précision et endurance et l'application de systèmes hydrauliques est souvent très compliquée et trop onéreuse.

Le but de la présente invention est de proposer un dispositif d'asservissement simple et efficace permettant en même temps le contrôle de la profondeur d'organes et le guidage de la machine agricole sur les rangées de tubercules.

A cet effet, le dispositif objet de l'invention, comprend un ou plusieurs patins glissant sur le sol en prenant appui contre une ou plusieurs rangées de tubercules, ces patins sont reliés à un support mobile agencé de manière à pouvoir se déplacer d'une part selon un plan vertical et d'autre part selon un plan horizontal ou latéral vers la gauche ou vers la droite par rapport au châssis de la machine et à ce support sont associés des moyens de transmission du mouvement pouvant agir respectivement sur le réglage de la profondeur d'un ou plusieurs organes de la machine et sur la direction de la machine.

Une autre caractéristique de l'invention est que chaque mouvement du support mobile agit de manière proportionnelle sur la manette d'un distributeur hydraulique incorporé respectivement dans le circuit hydraulique du réglage en hauteur des organes de la machine ou dans le circuit hydraulique de la direction de la machine.

D'autres caractéristiques et détails de l'invention ressortiront de la description donnée ci-après à titre d'exemple de réalisation pratique non limitatif en se référant aux dessins annexés dans lesquels :

    - la figure 1 est une vue en perspective d'un dispositif selon l'invention ;

    - la figure 2 est un schéma hydraulique simplifié montrant comment l'objet de l'invention est incorporé dans le circuit hydraulique existant.

Sur ces dessins on a montré en 10 le support mobile d'un dispositif selon l'invention relié à une plaque 12 solidaire du châssis d'une machine agricole.

Les patins 16 glissent sur le sol en s'appuyant latéralement sur la partie supérieure d'une rangée de tubercules.

Les patins 16 sont reliés séparément au support 10 au moyen de bras 18 réglables en largeur par un mécanisme 20 à pas de vis inversé.

Les bras 18 s'étendent vers le centre à l'intérieur d'un tube transversal 22 qui fait corps avec une partie verticale 24 réglable en hauteur par rapport au support 10 au moyen d'une manivelle 26 munie d'un pas de vis 28 et d'un boulon de blocage 30. Le support 10 est relié à la plaque 12 du châssis par l'intermédiaire de quatre biellettes 32 disposées selon les arêtes d'un parallélépipède couché ayant comme base d'un côté une plaque 34 solidaire du support 10 et de l'autre côté la plaque 12 solidaire du châssis de la machine.

Grâce à ce montage, le support 10 peut donc se déplacer dans un plan vertical de haut en bas pour suivre les variations du niveau du sol et peut également se déplacer dans un plan horizontal de gauche à droite pour suivre l'alignement des tubercules dans le sol.

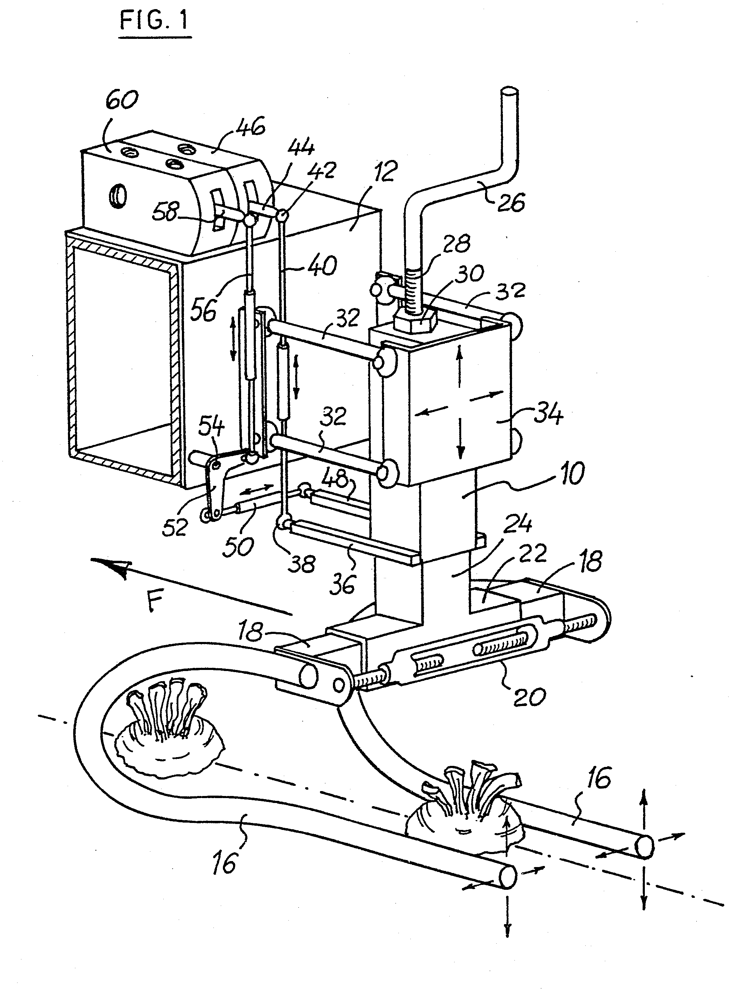

Pour transmettre les mouvements du support 10 aux circuits hydrauliques concernés on a prévu dans l'exemple de réalisation illustré à la figure 1, des jeux de tringles reliant les déplacements du support 10 aux manettes de distributeurs hydrauliques.

Pour le mouvement vertical on prévoit un bras 36 fixé horizontalement à la partie inférieure du support 10 à l'extrémité duquel est reliée, au moyen d'une rotule 38, une tringle verticale 40 également reliée au moyen d'une rotule 42 à la manette 44 d'un distributeur hydraulique 46 à simple effet.

Pour le mouvement horizontal on prévoit également un bras horizontal 48 fixé au support 10 et relié par une tringle horizontale 50 et un levier coudé 52, articulé en 54 sur la plaque 12 solidaire du châssis, à une tringle verticale 56 reliée à la manette 58 d'un distributeur hydraulique 60 à double effet.

A chaque point de liaison on prévoit bien entendu des rotules comme pour le mouvement vertical.

Chaque tringle 40, 50 et 56 sera avantageusement munie d'un dispositif de réglage de la longueur, bien connu en soi.

En fonctionnement, la machine agricole avance dans le sens de la flèche F, les patins 16 sont disposés le long d'une rangée de tubercules et suivent les variations du terrain.

Lorsqu'une dénivellation se produit vers le haut les patins 16 et le support suivent ce mouvement et la tringle 40 agit sur la manette 44 du distributeur 46.

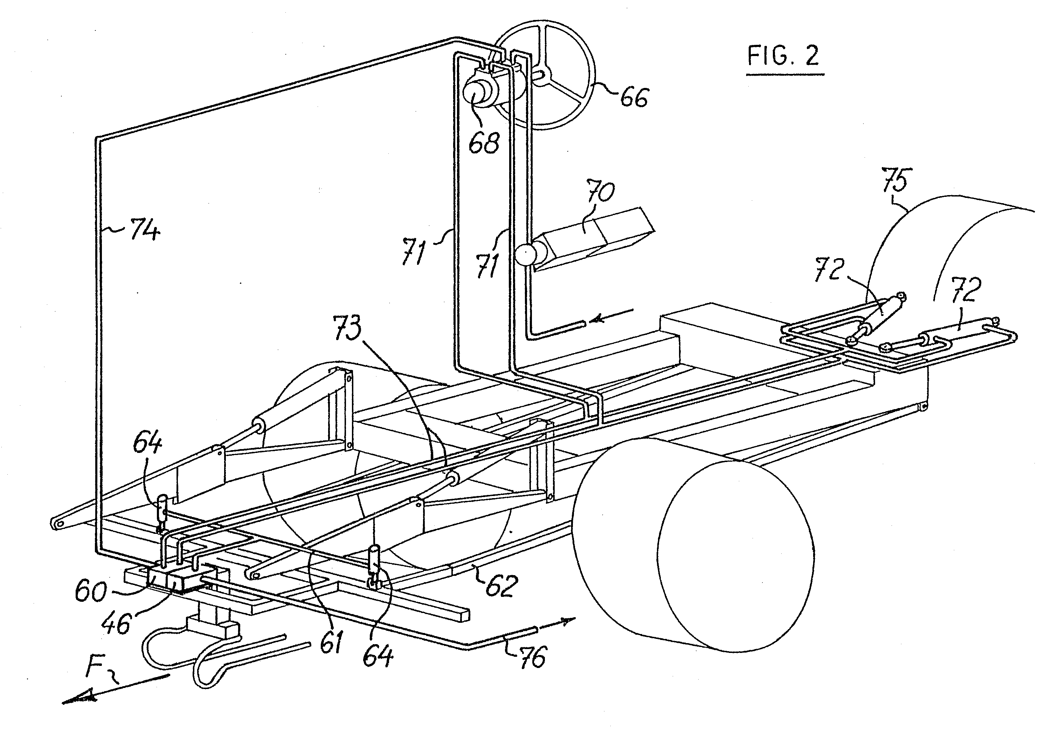

Sur la figure 2 on peut voir que ce distributeur est incorporé dans le circuit hydraulique 61 qui commande le réglage en hauteur du châssis mobile 62, muni d'organes d'arrachage par exemple, par les vérins hydrauliques 64. La position de la manette 44 du distributeur 46 intervient donc directement et proportionnellement sur le fonctionnement et le positionnement des vérins 64.

Lorsque l'alignement de la rangée de tubercules varie vers la gauche ou vers la droite, cette variation est suivie par les patins 16 et le support se déplace latéralement.

La tringle 50 fait basculer le levier coudé 52 et la tringle 56 agit de façon correspondante sur la manette 58 du distributeur 60.

Comme montré à la figure 2, ce distributeur à double effet 60 est incorporé dans le circuit hydraulique de la direction de la machine. Cette direction comprend essentiellement un guidon 66 relié à une unité distributrice de direction hydraulique 68 généralement connue sous la dénomination "orbitrol". Cette unité 68 reçoit de l'huile sous pression par la pompe hydraulique 70 alimentée par le réservoir. Deux sorties de cette unité 68 sont reliées par des conduits 71 aux deux vérins hydrauliques double effet 72 pouvant agir directement ou indirectement sur les roues de direction 75. Dans le cas d'un châssis articulé, ces vérins 72 agissent sur l'articulation. Les deux sorties du distributeur 60 sont reliées par les conduits 73 aux deux conduits 71 et peuvent donc agir directement sur les vérins de direction 72.

5

Les deux distributeurs 60 et 46 sont alimentés par une canalisation d'huile sous pression 74 et le retour vers le réservoir est prévu par la canalisation 76.

Selon la réalisation illustrée aux figures 1 et 2, les patins 16 sont disposés très près l'un de l'autre en prenant appui de part et d'autre sur une rangée de tubercules.

On peut toutefois prévoir que les deux patins 16 soient plus espacés en largeur en allongeant les bras 18 de manière que chaque patin s'appuie à l'extérieur ou à l'intérieur de plusieurs rangées de tubercules. On peut ainsi encore augmenter la précision et la stabilité du dispositif d'asservissement.

Un avantage du dispositif objet de l'invention est qu'il agit automatiquement et simultanément sur deux commandes hydrauliques ayant des fonctions différentes.

Un autre avantage est que le conducteur ne doit pas actionner une manette hydraulique ou autre bouton de commande pour passer du fonctionnement manuel vers le fonctionnement par asservissement automatique mais que celui-ci devient opératif dès que les patins sont en contact avec le sol.

Toutefois, il est à noter que, pour des raisons de sécurité, l'actionnement de la direction hydraulique avec le guidon 66 reste toujours prioritaire sur le restant du circuit hydraulique d'asservissement.

Bien entendu d'autres réalisations et applications du dispositif qui vient d'être décrit uniquement à titre d'exemple non limitatif peuvent être envisagées par l'homme de l'art sans sortir du cadre de l'invention.

## REVENDICATIONS

1. Dispositif d'asservissement combiné pour le contrôle de la profondeur d'organes et le guidage d'une machine agricole comprenant un ou plusieurs palpeurs en forme de patin glissant sur le sol en prenant appui contre une ou plusieurs rangées de tubercules, caractérisé en ce que les patins (16) sont reliés à un support mobile (10) agencé de manière à pouvoir se déplacer d'une part selon un plan vertical et d'autre part selon un plan horizontal ou latéral vers la gauche ou vers la droite par rapport au châssis de la machine et en ce que à ce support (10) sont associés des moyens de transmission du mouvement pouvant agir respectivement sur le réglage de la profondeur d'un ou plusieurs organes de la machine et sur la direction de la machine.

2. Dispositif selon la revendication 1, caractérisé en ce que tout déplacement du ou des patins (16) et du support mobile (10) dans un plan vertical provoque, par l'intermédiaire des moyens de transmission du mouvement, une modification du circuit hydraulique relié aux vérins de réglage de la profondeur du ou des organes concernés.

3. Dispositif selon la revendication 1, caractérisé en ce que tout déplacement du ou des patins (16) et du support mobile (10) dans un plan horizontal ou latéral vers la gauche ou vers la droite de la machine provoque, par l'intermédiaire des moyens de transmission du mouvement, une modification du circuit hydraulique relié à la direction de la machine.

4. Dispositif selon les revendications 1 à 3, caractérisé en ce que les modifications de chaque circuit hydraulique concerné sont obtenues par le déplacement proportionnel de la manette d'un distributeur hydraulique (46, 60).

5. Dispositif selon la revendication 1, caractérisé en ce que les patins (16) sont reliés séparément au support au moyen d'un mécanisme réglable de manière à pouvoir régler d'une part la distance entre les patins (16) et d'autre part les positions latérales des patins par rapport à l'axe longitudinal du châssis de la machine.

6. Dispositif selon la revendication 1, caractérisé en ce que les patins (16) sont montés sur une partie inférieure (24) du support (10) pouvant subir un réglage manuel préalable de la profondeur normale de travail des organes à l'aide d'une manivelle (26) munie d'un pas de vis (28) et d'un boulon de blocage (30).

7. Dispositif selon la revendication 1, caractérisé en ce que le support mobile (10) est relié au châssis de la machine à l'aide de quatre biellettes (32) disposées selon les arêtes d'un parallélipipède couché ayant comme base d'un côté une plaque (34) solidaire du support (10) et de l'autre côté une plaque (12) solidaire du châssis.

8. Dispositif selon les revendications 1 à 3, caractérisé en ce que les moyens de transmission des mouvements du support (10) vers les distributeurs hydrauliques (46, 60) sont réalisés à l'aide de tringles (40, 50, 56) réglables en longueur, reliant chaque manette (44, 58) du distributeur à l'extrémité d'un bras (36, 48) solidaire du support.

9. Dispositif selon les revendications 1 à 8, caractérisé en ce que chaque déplacement vertical du support (10) est transmis par la tringle (40) à la manette (44) d'un distributeur hydraulique (46) à simple effet incorporé dans le circuit hydraulique des vérins (64) réglant la profondeur de travail d'un ou de plusieurs organes de la machine.

10. Dispositif selon les revendications 1 à 9, caractérisé en ce que chaque déplacement latéral du support (10) est transmis par une ou plusieurs tringles

8  0118410

(50, 56) à la manette (58) d'un distributeur hydraulique (60) à double effet incorporé dans le circuit hydraulique de l'unité de direction (68) vers les vérins (72)
pouvant agir sur les roues de direction de la machine.

FIG. 1

FIG. 2

Office européen
des brevets

# RAPPORT DE RECHERCHE EUROPEENNE

EP 84 87 0027

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-4 031 962 (ELLINGER) <br><br> * Colonne 3, ligne 26 - colonne 8, ligne 22; figures 1-7 * | 1-5,8, 9 | A 01 D 33/14 <br> A 01 B 69/00 |
| X | DE-A-2 912 809 (SCHMOTZER) <br> * Pages 8-14; figures 1-4 * | 1-4,8 | |
| A | GB-A-1 515 504 (DYSON) <br><br> * Page 2, linge 20 - page 7, ligne 125; figures 1,2,4,5 * | 1,3,4, 8,10 | |
| A | DE-A-2 730 281 (SCHMOTZER) | | |
| A | DE-A-1 457 923 (BLEINROTH) <br><br> ----- | | DOMAINES TECHNIQUES RECHERCHES (Int. Cl. ³) <br><br> A 01 D <br> A 01 B |

Le présent rapport de recherche a été établi pour toutes les revendications

| Lieu de la recherche <br> LA HAYE | Date d'achèvement de la recherche <br> 22-05-1984 | Examinateur <br> VERMANDER R.H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82